# EUROPEAN PATENT SPECIFICATION

(11) **EP 1 800 449 B1**
(45) Date of publication and mention of the grant of the patent: **12.11.2008**
(21) Application number: 04783261.3
(22) Date of filing: 03.09.2004
(51) Int. Cl.: H04L 29/06, H04L 12/24

(54) **MECHANISM FOR AUTOMATIC DEVICE MISCONFIGURATION DETECTION AND ALERTING**
MECHANISMUS ZUR AUTOMATISCHEN EINRICHTUNGS-FEHLKONFIGURATIONSERKENNUNG UND -MELDUNG
SYSTEME DE DETECTION ET D'ALERTE AUTOMATIQUES DE MAUVAISE CONFIGURATION DE DISPOSITIF

(43) Date of publication of application: 27.06.2007
(73) Proprietor: Thomson Licensing, 92100 Boulogne-Billancourt (FR)
(72) Inventor: MATHUR, Saurabh, Monmouth Junction, NJ 08852 (US); ZHANG, Junbiao, Bridgewater, NJ 08807 (US)
(74) Representative: Ruellan-Lemonnier, Brigitte
(86) International application number: PCT/US2004/028952
(87) International publication number: WO 2006/028455

(56) References cited:
- EP-A- 0 903 889
- WO-A-03/098872
- US-A1- 2004 006 612
- US-B1- 6 349 306
- US-B1- 6 418 468

## Description

### FIELD OF THE INVENTION

The present invention generally relates to electronic devices having factory default settings and, more particularly, to an apparatus and method for automatically detecting and indicating a mis-configuration condition in an electronic device having one or more factory-default settings.

### BACKGROUND OF THE INVENTION

Many electronic devices such as communication and/or multimedia devices are pre-configured with factory set defaults. Such devices include, but are not limited to, network equipment such as routers, Access Points (including Wireless Access Points (WAPs)), and so forth. For example, a WAP is set to have a default channel, a default network name and a default encryption setting.
These default settings allow the device to be functioning in at least a basic mode. In many cases, the user of the device does not bother to change these default values. This can be acceptable in some cases relating to certain types of devices (e.g., televisions), but for some other devices like APs, this is not acceptable. In many APs, security is disabled by default. If the user does not configure the AP to enable security, all the data is sent unencrypted. As a result, any malicious user can snoop the data. In a corporate environment, this problem is even more acute because confidential data can be involved. Moreover, if multiple APs are located in geographically close locations, they can interfere with each other if the default channel setting is not changed. Thus, some of the parameters of these devices are critical and should be changed by the user/administrator. However, although most of the devices come with factory defaults, none of these devices provide a mechanism to alert the user/administrator that the default settings are in use and can be potentially risky to employ.

Accordingly, it would be desirable and highly advantageous to have an apparatus and/or method that overcome the above-identified deficiencies of the prior art.

Prior art document US2004/006612 discloses an apparatus and method for configuring, verifying and correcting the settings of devices in a Storage Area Network. Document US6418468 discloses a policy verifier that acquires configuration information about the system under management, and operates to determine whether all the policies are feasible for the system. Document EP0903889 discloses a system wherein configuration information of a managed device can be verified in real time with minimal customer effort.

### SUMMARY OF THE INVENTION

The problems stated above, as well as other related problems of the prior art, are solved by the present invention, which is directed to an apparatus and method for automatically detecting and indicating a mis-configuration condition in an electronic device having one or more factory-default settings.

The present invention provides an apparatus and method that detect if an electronic device is configured with factory default settings and to provide an indication of the same, if the device is so configured. The indication can be provided, for example, using a visual indication including, but not limited to, changing a visible color, sending a message to a management/administrative entity via email, employing cellular text messaging service, and so forth. It is to be appreciated that the present invention can be implemented to automatically detect any kind of mis-configuration and alert a user/administrator about the same.

According to an aspect of the present invention, there is provided a method for automatically detecting and indicating a mis-configuration condition in an electronic device having one or more factory-default settings. At least one mis-configuration rule is received that relates to at least one mis-configuration condition of the electronic device. The at least one mis-configuration rule is checked against at least one corresponding current configuration setting to determine whether the electronic device is mis-configured. A mis-configuration alert is provided with respect to the electronic device, when the electronic device is determined to be mis-configured in said checking step.

According to another aspect of the present invention, there is provided an apparatus for automatically detecting and indicating a mis-configuration condition in an electronic device having one or more factory-default settings. A memory device stores at least one mis-configuration rule and at least one corresponding current configuration setting, the at least one mis-configuration rule relating to at least one mis-configuration condition of the electronic device. Rule checking circuitry checks the at least one mis-configuration rule against the at least one corresponding current configuration setting to determine whether the electronic device is mis-configured. A mis-configuration indicator provides a mis-configuration alert when the electronic device is determined to be mis-configured by the rule checking circuitry.

These and other aspects, features and advantages of the present invention will become apparent from the following detailed description of preferred embodiments, which is to be read in connection with the accompanying drawings.

### BRIEF DESCRIPTION OF THE DRAWINGS

FIG. 1 is a block diagram illustrating an apparatus 100 for automatically detecting and indicating a mis-configuration condition in an electronic device 199 having one or more factory-default settings, according to an illustrative embodiment of the present invention; and
FIG. 2 is a flow diagram illustrating a method for automatically detecting and indicating a mis-configuration condition in an electronic device 199 having one or more factory-default settings, according to an illustrative embodiment of the present invention.

### DETAILED DESCRIPTION OF THE INVENTION

The present invention is directed to an apparatus and method for automatically detecting and indicating a mis-configuration condition in an electronic device having one or more factory-default settings.

It is to be understood that the present invention can be implemented in various forms of hardware, software, firmware, special purpose processors, or a combination thereof. Preferably, the present invention is implemented as a combination of hardware and software. Moreover, the software is preferably implemented as an application program tangibly embodied on a program storage device. The application program can be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein can either be part of the microinstruction code or part of the application program (or a combination thereof) that is executed via the operating system. In addition, various other peripheral devices can be connected to the computer platform such as an additional data storage device and a printing device.

It is to be further understood that, because some of the constituent system components and method steps depicted in the accompanying Figures are preferably implemented in software, the actual connections between the system components (or the process steps) can differ depending upon the manner in which the present invention is programmed. Given the teachings herein, one of ordinary skill in the related art will be able to contemplate these and similar implementations or configurations of the present invention.

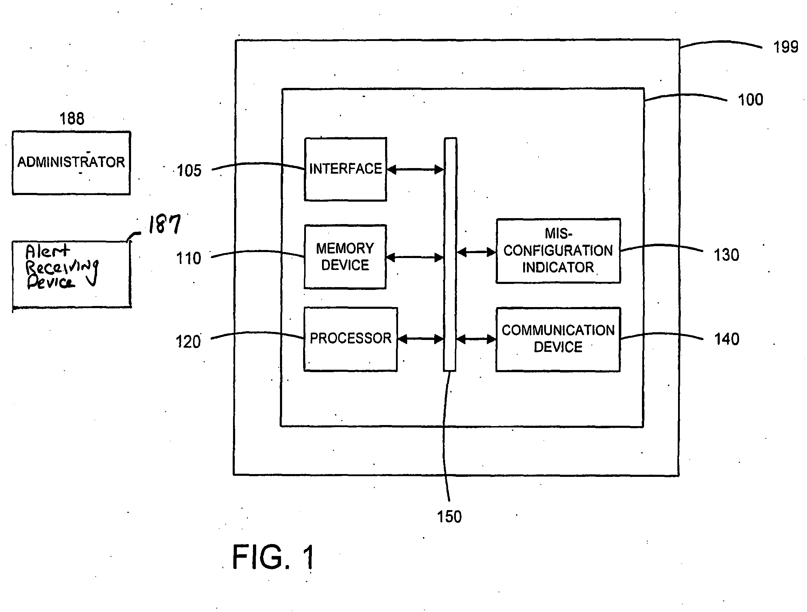

FIG. 1 is a block diagram illustrating an apparatus 100 for automatically detecting and indicating a mis-configuration condition in an electronic device 199 having one or more factory-default settings, according to an illustrative embodiment of the present invention.

The apparatus 100 includes a user/administrator interface (hereinafter "interface") 105, a memory device 110, a processor 120, a mis-configuration indicator 130, and a communication device 140, all interconnected via a bus 150. The bus 150, in addition to interconnecting the preceding elements, also serves as an interface to the electronic device 199 and to other external components (not shown). The interface 105 is for inputting information into the apparatus 100. Such information can include, but is not limited to, one or more mis-configuration rules. The mis-configuration rules specify one or more mis-configuration conditions of the electronic device 199.

The memory device 110 is preferably a non-volatile memory device. The memory device 110 preferably includes a default area 110A and a user area 110B. The default area 110A of the non-volatile memory 110 stores the factory default settings. If necessary or desired, a user or an administrator (hereinafter collectively referred to as "administrator") 188 can always re-apply one or more of the factory-default settings to the electronic device 199. For example, the factory default settings can be re-applied to the electronic device 199 through some mechanism such as, but not limited to, pressing a "restore" button. Examples of some factory-default settings, for example, for a wireless AP, include, but are not limited to:

| | | |
|---|---|---|
| Extended Service Set Identifier (ESSID) | : | "linksys" |
| Security | : | OFF |
| Encryption Key | : | None |
| Channel | : | 3 |
| Default Admin Password | : | Admin |

Typically and preferably, the default area 110A cannot be overwritten by the administrator 188. This allows the electronic device 199 to be reset to factory-settings even if the administrator 188 mis-configured the electronic device 199.

The user area 110B is accessible for writing thereto. The administrator 188 can choose his/her own values for various settings/parameters. For example, for a wireless AP, some of these parameters could be set as follows:

| | | |
|---|---|---|
| Extended Service Set Identifier (ESSID) | : | "cafetria01" |
| Security | : | ON |
| Encryption Key | : | alf!G |
| Channel | : | 6 |
| Default Admin Password | : | ap @ 12p0dwCCv |

The processor 120 performs functions as specified herein. Such functions include, but are not limited to, checking mis-configuration rules stored in the memory device 110 against corresponding current configuration settings to determine whether the electronic device is mis-configured. As noted above, the mis-configuration rules specify one or more mis-configuration conditions of the electronic device 199. It is to be appreciated that while the apparatus 100 is described to include a processor 120, other circuitry such as comparators, logic gates, Application Specific Integrated Circuits (ASICs), Programmable Logic Arrays (PLAs), and so forth can be employed to perform the method steps described herein. The processor 120 and the other circuitry can also be interchangeably referred to herein as "rule checking circuitry".

The mis-configuration indicator 130 provides an indication to the administrator 188 that the electronic device is mis-configured. The indication can be provided visually, audibly, or using any other methodology or structure to provide such indication. For example, one or more speakers, Light Emitting Diodes (LEDs) or other visual indicators can be employed, while maintaining the spirit of the present invention. Of course, the present invention is not limited to the preceding types of indicators and, thus, other types of indicators can also be employed while maintaining the spirit of the present invention. It is to be appreciated that while the mis-configuration indicator 130 is shown in FIG. 1 as being located proximate to the administrator, the same indicator 130 or another similar indicator can be located at a location remote from the apparatus 100 or the electronic device 199 in the case when the administrator is located remote from the apparatus 10 or the electronic device 199. In this way, even if the administrator is away from the electronic device 199 and, thus, cannot remedy the situation locally (i.e., correctly configure the electronic device 199), then perhaps the administrator can contact someone who is proximate to the electronic device (but is unaware of the indication) in order to expediently remedy the situation before an undesirable condition occurs (i.e., theft or snooping of data). In such a case, the communication device 140 would be employed to communicate the indication to the administrator 188.

The communication device 140 allows for communication between the electronic device 199 and the administrator 188 who can configure the electronic device 199 correctly. Accordingly, if the administrator 188 is in a location remote from the apparatus 100 and the electronic device 199, the administrator 188 can still nonetheless receive an indication that the electronic device 199 is mis-configured.

The communication device 140 can be, for example, but is not limited to a modem, a transmitter, and so forth. In this way, for example, the modem can be used to dial a telephone, beeper, Personal Digital Assistant (PDA) and/or other device (collectively referred to as "mis-configuration alert remote receiving device" 187) that is local to the administrator 188.

Moreover, it is to be appreciated that while the apparatus 100 is described as including the preceding-identified elements, one or more of such elements can already be included in the electronic device and, thus, can be utilized as described herein in accordance with the present invention to avoid duplicity of parts while maintaining the spirit of the present invention.

Additionally, it is to be appreciated that while the apparatus 100 is shown as being within electronic device 199, the entire apparatus 100 or any parts thereof can be located external to the electronic device 199, while maintaining the spirit of the present invention.

Further, it is to be appreciated that, given the teachings of the present invention provided herein, one of ordinary skill in the related art will contemplate these and various other elements for performing the steps described herein, while maintaining the spirit of the present invention.

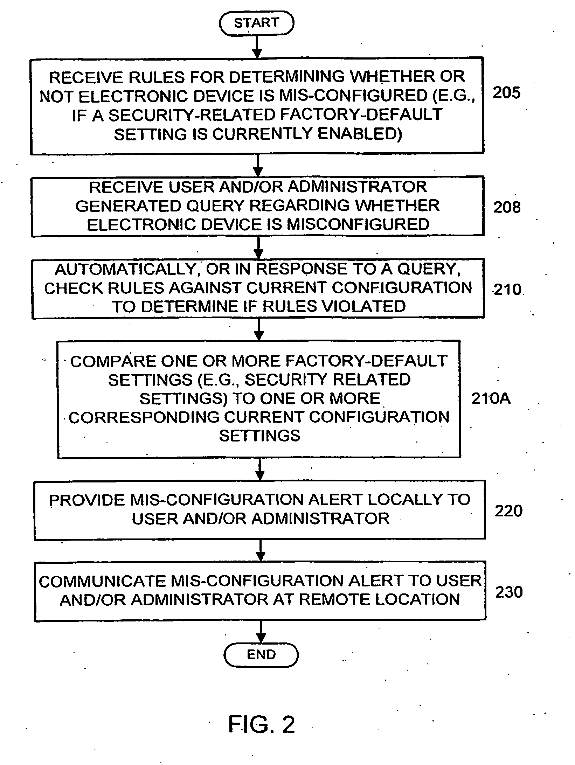

FIG. 2 is a flow diagram illustrating a method for automatically detecting and indicating a mis-configuration condition in an electronic device 199 having one or more factory-default settings, according to an illustrative embodiment of the present invention. The apparatus 100 shown in FIG. 1 implements the method of FIG 2.

At least one rule (hereinafter "rules") for determining whether or not the electronic device 199 is mis-configured is received, for example, via the interface 105 (step 205). It is to be appreciated that the rules can also be received from a remote location via the communication device 140. The rules can also be pre-loaded upon construction of the electronic device 199. It is to be further appreciated that the rules can be set statically or can be dynamically configured by the administrator 188 via, for example, the interface 105 and/or the communication device 140. The rules can be complex and specific, for example, particularly describing the preferred settings. Alternatively, the rules can be simple and can simply determine whether some or all of the currently set parameters/settings are the same as the corresponding factory default settings (particularly security related settings).

At a random or pre-determined time or with respect to some event (e.g., the device is powered on, etc.), the rules are checked against the current configuration to determine whether or not any of the rules have been violated (i.e., to determine whether the electronic device 199 is mis-configured as specified in the rules) (step 210). In one embodiment of the present invention, wherein the rule is that "the configuration in use should not be exactly the same as the default factory setting", the , apparatus 100 compares one or more factory-default settings to one or more corresponding current configuration settings to determine if there is a match (step 210a). The actual settings that are compared can include "critical settings" in that their mis-configuration can pose security or other undesirable risks to the device and the information communicated therewith.

It is to be appreciated that, in addition to or in place of having step 210 automatically performed to determine whether the electronic device 199 is mis-configured, the administrator 188 can query the electronic device 199 to determine whether or not the electronic device 199 is mis-configured (e.g., configured with one or more factory default settings). In such a case, a user and/or administrator generated query is received regarding whether the electronic device 199 is mis-configured (step 208). In such a case, a mechanism (such as, e.g., interface 105) for performing the query of step 208 can be provided on the apparatus 100 and/or the electronic device 199. For example, in the case of a wireless AP, an SNMP (Simple Network Management Protocol) Interface can be provided on the apparatus 100 and/or the electronic device 199 to perform the query.

If, in fact, one or more of the rules are violated, then the apparatus 100 alerts the administrator 188 via the mis-configuration alert indicator 140 (step 220). For example, in the case of the rule specified above with respect to step 210a, if the one or more factory-default settings are the same as the one or more corresponding current configuration settings, then the apparatus 100 alerts the administrator 188 via mis-configuration alert indicator 140. It is to be appreciated that the way in which the administrator 188 is alerted is not critical to the present invention and, thus, any approach and/or device for providing the alert can be employed while maintaining the spirit of the present invention. For example, the alert can be provided, but is not limited to, the following: (a) a visual method/device (flashing LED); (b) an audio method/device (series of beeps); (c) an alert message (e.g., Simple Network Monitoring Protocol (SNMP) trap to management console, Short Message Service (SMS) message); and so forth.

It is to be appreciated that the mis-configuration alert can be provided to the administrator at a remote location with respect to the electronic device 199 via the communication device 140 (step 230).

A description will now be given further regarding mis-configuration detection and alerting, according to another embodiment of the present invention. It is to be appreciated that any kind of rules that govern the proper configuration of a device can be employed in accordance with the present invention. As noted above, such rules can either be statically configured, or can be dynamically changed by the administrator. Moreover, as noted above, the apparatus 100 monitors the configuration of the electronic device 199 and, upon detecting any violation of the rules, alerts the administrator. The default configuration detection is simply one possible rule example that can be employed in accordance with the present invention. In the illustrative default configuration detection case, the rule is that "the configuration in use should not be exactly the same as the default factory setting". However, as noted above, it is to be appreciated that other useful rules can also be employed in accordance with the present invention. Some other illustrative rules that can be employed include, but are not limited to the following described immediately herein after. For example, one such rule is that if encryption is not configured, then packet filtering must be set up. Another illustrative rule is that if neither encryption nor packet filtering are turned on, then the transmit power must be under 20mW. Yet another illustrative rule is that if the AP is configured as a router, then the Wireless Local Area Network (WLAN) interface and the Ethernet interface should not belong to the same sub network.

It is to be appreciated that the present invention is not limited to the specific rules and mis-configuration conditions described herein and, thus, other rules and mis-configuration conditions, as readily contemplated by one of ordinary skill in the related art, can also be employed with respect to the present invention while maintaining the spirit of the present invention.

A description will now be given of violation detection, according to an illustrative embodiment of the present invention. It is to be appreciated that the detections of violation conditions can be carried out in a variety of ways. It is to be further appreciated that the present invention is not limited to the violation detection methodologies and steps described herein and, thus, other steps, as readily contemplated by one of ordinary skill in the related art, can also be employed in accordance with the present invention while maintaining the spirit of the present invention. The detection process can be started whenever the configuration is changed through the administration interface, or at any other time. For example, the detection process can be started whenever the device reboots, the detection process can be scheduled periodically, and/or can be started manually by the administrator.

Although the illustrative embodiments have been described herein with reference to the accompanying drawings, it is to be understood that the present invention is not limited to those precise embodiments, and that various other changes and modifications can be affected therein by one of ordinary skill in the related art without departing from the scope the invention. All such changes and modifications are intended to be included within the scope of the invention as defined by the appended claims.

## Claims

1. A method for automatically detecting and indicating a mis-configuration condition in an electronic device having at least one factory-default setting, the method comprising the steps of:
checking at least one mis-configuration rule relating to at least one mis-configuration condition of the electronic device, against at least one corresponding current configuration setting to determine whether the electronic device is mis-configured; and
providing a mis-configuration alert with respect to the electronic device, when the electronic device is determined to be mis-configured in said checking step,
wherein the at least one mis-configuration rule comprises a rule that specifies that the at least one corresponding current configuration setting must be different than at least one corresponding factory default setting.

2. The method of claim 1, further including the step of dynamically receiving the at least one mis-configuration rule from at least one of a user and an administrator.

3. The method of claim 1, wherein the at least one corresponding factory default setting relates to a disabled state of a security feature of the electronic device.

4. The method of claim 1, wherein said checking step is performed at least one of: (a) at a random time, (b) a pre-determined time, and (b) with respect to at least one pre-specified event.

5. The method of claim 1, wherein said checking step is performed at least one of: (a) automatically and (b) in response to a user query of a mis-configuration state of the electronic device.

6. The method of claim 1, further comprising the step of receiving a query from at least one of a user and an administrator, the query relating to whether the electronic device is currently mis-configured, and wherein said checking step is performed in response to said receiving step.

7. The method of claim 1, wherein said providing step provides the mis-configuration alert to at least one of a user and an administrator.

8. The method of claim 1, wherein the mis-configuration alert is provided to the at least one of the user and the administrator at a remote location with respect to the electronic device using a pre-designated communication medium.

9. The method of claim 1, wherein said providing step provides the mis-configuration alert at least one of visually and audibly.

10. The method of claim 1, wherein said providing step provides the mis-configuration alert using an alert message.

11. The method of claim 10, wherein the alert message is a Short Message Service, SMS, message.

12. The method of claim 10, wherein the alert message employs a Simple Network Monitoring Protocol, SNMP, trap.

13. An apparatus for automatically detecting and indicating a mis-configuration condition in an electronic device having one or more factory-default settings, comprising:
a memory device for storing at least one mis-configuration rule, and at least one corresponding current configuration setting, the at least one mis-configuration rule relating to at least one mis-configuration condition of the electronic device; rule checking circuitry for checking the at least one mis-configuration rule against the at least one corresponding current configuration setting to determine whether the electronic device is mis-configured; and
a mis-configuration indicator for providing a mis-configuration alert when the electronic device is determined to be mis-configured by said rule checking circuitry,
wherein the at least one mis-configuration rule comprises a rule that specifies that the at least one corresponding current configuration setting must be different than at least one corresponding factory default setting.

14. The apparatus of claim 13, further comprising a communication device for communicating the mis-configuration alert to at least one of a user and an administrator at a remote location with respect to the electronic device.

15. The apparatus of claim 13, wherein the memory device is a non-volatile memory device.

16. The apparatus of claim 13, wherein the memory device comprises:
a default area for storing the one or more factory-default settings; and
a user area accessible by at least one of a user and an administrator for writing thereto corresponding current configuration settings.

17. The apparatus of claim 13, wherein the at least one mis-configuration rule and the at least one corresponding current configuration setting both relate to a security feature of the electronic device.

18. The apparatus of claim 17, wherein the security feature relates to at least one of enabling/disabling of a security function, an encryption key and a password.

19. The apparatus of claim 13, further comprising an interface for receiving inputs from at least one of a user and an administrator.

20. The apparatus of claim 19, wherein the interface is further for receiving the at least one mis-configuration rule for subsequent storage in the memory device.

21. The apparatus of claim 19, wherein the at least one mis-configuration rule is capable of being set dynamically via the interface by the at least one of the user and the administrator.

22. The apparatus of claim 19, wherein the interface is further for receiving a query from at least one of a user and an administrator, the query relating to whether the electronic device is currently mis-configured, and wherein the rule checking circuitry automatically checks the at least one mis-configuration rule against the at least one corresponding current configuration setting in response to a receipt of the query by the interface.

23. The apparatus of claim 19, wherein the interface comprises a Simple Network Management Protocol (SNMP) Interface.

24. The apparatus of claim 13, further comprising a communication device for providing the mis-configuration alert to at least one of a user and an administrator at a remote location with respect to the electronic device.

25. The method of claim 1 comprising the further steps of:
maintaining at least one mis-configuration rule relating to a security feature of the electronic device in a memory device contained within the electronic device;
wherein the memory device is further for storing the one or more factory-default settings.

26. The apparatus of claim 13 wherein said memory device is further for storing the one or more factory default settings of the electronic device.

## Patentansprüche

1. Verfahren zum automatischen Erkennen und Anzeigen eines Fehlkonfigurationszustandes in einer elektronischen Einrichtung, die mindestens eine werkseitige Standardeinstellung aufweist, wobei das Verfahren die nachfolgenden Schritte umfasst:
Vergleichen von mindestens einer Fehlkonfigurationsregel, die sich auf mindestens einen Fehlkonfigurationszustand der elektronischen Einrichtung bezieht, mit mindestens einer entsprechenden aktuellen Konfigurationseinstellung, um festzustellen, ob die elektronische Einrichtung fehlerhaft konfiguriert ist; und Bereitstellen einer Fehlkonfigurationswarnung im Hinblick auf die elektronische Einrichtung, wenn in dem Vergleichsschritt festgestellt wird, dass die elektronische Einrichtung fehlerhaft konfiguriert ist,
wobei die mindestens eine Fehlkonfigurationsregel eine Regel umfasst, die spezifiziert, dass die mindestens eine entsprechende aktuelle Konfigurationseinstellung sich von mindestens einer entsprechenden werkseitigen Standardeinstellung unterscheiden muss.

2. Verfahren nach Anspruch 1, ferner den Schritt des dynamischen Empfangens der mindestens einen Fehlkonfigurationsregel von einem Benutzer und/oder einem Administrator umfassend.

3. Verfahren nach Anspruch 1, wobei sich die mindestens eine entsprechende werkseitige Standardeinstellung auf einen gesperrten Zustand eines Sicherheitsmerkmales der elektronischen Einrichtung bezieht.

4. Verfahren nach Anspruch 1, wobei der Vergleichsschritt bei mindestens einem der nachfolgenden Punkte durchgeführt wird: (a) zu einem willkürlichen Zeitpunkt, (b) einem vorbestimmten Zeitpunkt, oder (b) im Hinblick auf mindestens ein zuvor spezifiziertes Ereignis.

5. Verfahren nach Anspruch 1, wobei der Vergleichsschritt auf mindestens eine der nachfolgenden Weisen durchgeführt wird: (a) automatisch oder (b) als Reaktion auf eine Benutzerabfrage eines Fehlkonfigurationszustandes der elektronischen Einrichtung.

6. Verfahren nach Anspruch 1, ferner den Schritt des Empfangens einer Abfrage von einem Benutzer und/oder einem Administrator umfassend, wobei sich die Abfrage darauf bezieht, ob die elektronische Einrichtung aktuell fehlerhaft konfiguriert ist, und wobei der Vergleichschritt als Reaktion auf den Empfangsschritt durchgeführt wird.

7. Verfahren nach Anspruch 1, wobei der Bereitstellungsschritt einem Benutzer und/oder einem Administrator die Fehlkonfigurationswarnung bereitstellt.

8. Verfahren nach Anspruch 1, wobei die Fehlkonfigurationswarnung dem Benutzer und/oder dem Administrator an einem im Hinblick auf die elektronische Einrichtung entfernten Standort unter Verwendung eines zuvor festgelegten Kommunikationsmediums bereitgestellt wird.

9. Verfahren nach Anspruch 1, wobei der Bereitstellungsschritt die Fehlkonfigurationswarnung auf mindestens eine der nachfolgenden Weisen bereitstellt, optisch oder akustisch.

10. Verfahren nach Anspruch 1, wobei der Bereitstellungsschritt die Fehlkonfigurationswarnung unter Verwendung einer Warnungsmitteilung bereitstellt.

11. Verfahren nach Anspruch 10, wobei die Warnungsmitteilung aus einer Mitteilung eines Kurzmitteilungsdienstes, SMS, besteht.

12. Verfahren nach Anspruch 10, wobei die Warnungsmitteilung eine Fangvorrichtung eines einfachen Netzwerkverwaltungsprotokolls, SNMP, verwendet.

13. Vorrichtung zum automatischen Erkennen und Anzeigen eines Fehlkonfigurationszustandes in einer elektronischen Einrichtung, die eine einzige oder mehrere werkseitige Standardeinstellungen aufweist, umfassend:
eine Speichereinrichtung zum Speichern von mindestens einer Fehlkonfigurationsregel und mindestens einer entsprechenden aktuellen Konfigurationseinstellung, wobei sich die mindestens eine Fehlkonfigurationsregel auf mindestens einen Fehlkonfigurationszustand der elektronischen Einrichtung bezieht;
eine Regel-Vergleichsschaltungsanordnung zum Vergleichen der mindestens einen Fehlkonfigurationsregel mit der mindestens einen entsprechenden aktuellen Konfigurationseinstellung, um festzustellen, ob die elektronische Einrichtung fehlerhaft konfiguriert ist; und eine Anzeigevorrichtung einer Fehlkonfiguration zum Bereitstellen einer Fehlkonfigurationswarnung, wenn durch die Regel-Vergleichsschaltungsanordnung festgestellt wird, dass die elektronische Einrichtung fehlerhaft konfiguriert ist,
wobei die mindestens eine Fehlkonfigurationsregel eine Regel umfasst, die spezifiziert, dass sich die mindestens eine entsprechende aktuelle Konfigurationseinstellung von mindestens einer entsprechenden werkseitigen Standardeinstellung unterscheiden muss.

14. Vorrichtung nach Anspruch 13, ferner eine Kommunikationseinrichtung zum Übertragen der Fehlkonfigurationswarnung an einen Benutzer und/oder einen Administrator an einem im Hinblick auf die elektronische Einrichtung entfernten Standort umfassend.

15. Vorrichtung nach Anspruch 13, wobei die Speichereinrichtung aus einer nichtflüchtigen Speichereinrichtung besteht.

16. Vorrichtung nach Anspruch 13, wobei die Speichereinrichtung umfasst:
einen Standardbereich zum Speichern der einen oder mehrerer werkseitiger Standardeinstellungen; und einen Benutzerbereich, der für einen Benutzer und/oder einen Administrator zugänglich ist, um dort entsprechende aktuelle Konfigurationseinstellungen hineinzuschreiben.

17. Vorrichtung nach Anspruch 13, wobei sich die mindestens eine Fehlkonfigurationsregel und die mindestens eine entsprechende aktuelle Konfigurationseinstellung beide auf ein Sicherheitsmerkmal der elektronischen Einrichtung beziehen.

18. Vorrichtung nach Anspruch 17, wobei sich das Sicherheittsmerkmal auf mindestens eines, das Freigeben/Sperren einer Sicherheitsfunktion, eines Verschlüsselungsschlüssels und eines Passwortes bezieht.

19. Vorrichtung nach Anspruch 13, ferner eine Schnittstelle zum Empfangen von Eingaben von einem Benutzer und/oder einem Administrator umfassend.

20. Vorrichtung nach Anspruch 19, wobei die Schnittstelle ferner zum Empfangen der mindestens einen Fehlkonfigurationsregel zum anschließenden Speichern in der Speichereinrichtung vorgesehen ist.

21. Vorrichtung nach Anspruch 19, wobei die mindestens eine Fehlkonfigurationsregel durch den Benutzer und/oder den Administrator über die Schnittstelle dynamisch eingestellt werden kann.

22. Vorrichtung nach Anspruch 19, wobei die Schnittstelle ferner zum Empfangen einer Abfrage von einem Benutzer und/oder einem Administrator vorgesehen ist, wobei sich die Abfrage darauf bezieht, ob die elektronische Einrichtung aktuell fehlerhaft konfiguriert ist, und wobei die Regel-Vergleichsschaltungsanordnung die mindestens eine Fehlkonfigurationsregel mit der mindestens einen entsprechenden aktuellen Konfigurationseinstellung als Reaktion auf einen Empfang der Abfrage durch die Schnittstelle vergleicht.

23. Vorrichtung nach Anspruch 19, wobei die Schnittstelle eine Schnittstelle eines einfachen Netzwerkverwaltungsprotokolls, SNMP, umfasst.

24. Vorrichtung nach Anspruch 13, ferner eine Kommunikationseinrichtung zum Bereitstellen der Fehlkonfigurationswarnung an einen Benutzer und/oder einen Administrator an einem im Hinblick auf die elektronische Einrichtung entfernten Standort umfassend.

25. Verfahren nach Anspruch 1, die nachfolgenden weiteren Schritte umfassend:
Aufrechterhalten von mindestens einer Fehlkonfigurationsregel, die sich auf ein Sicherheitsmerkmal der elektronischen Einrichtung bezieht, in einer Speichereinrichtung, die innerhalb der elektronischen Einrichtung enthalten ist;
wobei die Speichereinrichtung ferner zum Speichern der einen oder mehrerer werkseitiger Standardeinstellungen vorgesehen ist.

26. Vorrichtung nach Anspruch 13, wobei die Speichereinrichtung ferner zum Speichern der einen oder mehrerer werkseitiger Standardeinstellungen der elektronischen Einrichtung vorgesehen ist.

## Revendications

1. Procédé de détection et d'indication d'une condition de mauvaise configuration dans un dispositif électronique possédant au moins un paramètre par défaut d'usine, le procédé comprenant les étapes consistant à :
vérifier au moins une règle de mauvaise configuration concernant au moins une confition de mauvaise configuration du dispositif électronique, par rapport à au moins un paramètre de configuration actuel correspondant pour déterminer si le dispositif électronique possède une mauvaise configuration ; et
émettre une alerte de mauvaise configuration par rapport au dispositif électronique, lorsque le dispositif électronique est déterminé comme possédant une mauvaise configuration dans ladite étape de vérification,
où l'au moins une règle de mauvaise configuration comprend une règle qui spécifie que l'au moins un paramètre de configuration actuel correspondant doit être différent de l'au moins un paramètre par défaut d'usine correspondant.

2. Procédé selon la revendication 1, incluant en outre l'étape consistant à recevoir dynamiquement l'au moins une règle de mauvaise configuration provenant au moins d'un utilisateur ou d'un administrateur.

3. Procédé selon la revendication 1, où l'au moins un paramètre par défaut d'usine correspondant concerne un état désactivé d'une fonction de sécurité du dispositif électronique.

4. Procédé selon la revendication 1, où ladite étape de vérification est effectuée au moins : (a) à un moment aléatoire, (b) à un moment prédéterminé, ou (c) par rapport à au moins un événement pré-spécifié.

5. Procédé selon la revendication 1, où ladite étape de vérification est effectuée au moins : (a) automatiquement ou (b) en réponse à une requête utilisateur d'un état de mauvaise configuration du dispositif électronique.

6. Procédé selon la revendication 1, comprenant en outre l'étape consistant à recevoir une requête d'au moins un utilisateur ou un administrateur, la requête concernant le fait si le dispositif électronique possède actuellement une mauvaise configuration, et où ladite étape de vérification est effectuée en réponse à ladite étape de réception.

7. Procédé selon la revendication 1, où ladite étape d'émission fournit l'alerte de mauvaise configuration à au moins un utilisateur ou administrateur.

8. Procédé selon la revendication 1, où l'alerte de mauvaise configuration est fournie à l'au moins un utilisateur ou administrateur à un emplacement distant par rapport au dispositif électronique à l'aide d'un support de communication pré-désigné.

9. Procédé selon la revendication 1, où ladite étape d'émission fournit l'alerte de mauvaise configuration au moins de façon visuelle ou audible.

10. Procédé selon la revendication 1, où ladite étape d'émission fournit l'alerte de mauvaise configuration à l'aide d'un message d'alerte.

11. Procédé selon la revendication 10, où le message d'alerte est un message du service de messagerie SMS.

12. Procédé selon la revendication 10, où le message d'alerte utilise un bouchon du protocole SNMP.

13. Appareil de détection et d'indication automatiques d'une condition de mauvaise configuration dans un dispositif électronique possédant un ou plusieurs paramètres par défaut d'usine, comprenant :
un dispositif de mémoire permettant de stocker au moins une règle de mauvaise configuration et au moins un paramètre de configuration actuel correspondant, l'au moins une règle de mauvaise configuration concernant au moins une condition de mauvaise configuration du dispositif électronique ;
un circuit de surveillance de règle permettant de vérifier l'au moins une règle de mauvaise configuration par rapport à l'au moins un paramètre de configuration actuel correspondant pour déterminer si le dispositif électronique possède une mauvaise configuration ; et
un indicateur de mauvaise configuration permettant d'émettre une alerte de mauvaise configuration lorsque le dispositif électronique est déterminé comme possédant une mauvaise configuration par ledit circuit de vérification de règle.
où l'au moins une règle de mauvaise configuration comprend une règle qui spécifie que l'au moins un paramètre de configuration actuel correspondant doit être différent de l'au moins un paramètre par défaut d'usine correspondant.

14. Appareil selon la revendication 13, comprenant en outre un dispositif de communication permettant de communiquer l'alerte de mauvaise configuration à au moins un utilisateur ou administrateur à un emplacement distant par rapport au dispositif électronique.

15. Appareil selon la revendication 13, où le dispositif de mémoire est un dispositif de mémoire non volatile.

16. Appareil selon la revendication 13, où le dispositif de mémoire comprend :
une zone par défaut permettant de stocker l'un ou plusieurs paramètres par défaut d'usine ; et
une zone utilisateur accessible par au moins un utilisateur ou administrateur pour y écrire les paramètres de configuration actuels correspondants.

17. Appareil selon la revendication 13, où l'au moins une règle de mauvaise configuration et l'au moins un paramètre de configuration actuel correspondant concernent tous deux une fonction de sécurité du dispositif électronique.

18. Appareil selon la revendication 17, où la fonction de sécurité concerne au moins une activation/désactivation d'une fonction de sécurité, d'une clé de chiffrement ou d'un mot de passe.

19. Appareil selon la revendication 13, comprenant en outre une interface permettant de recevoir des entrées provenant d'au moins un utilisateur ou administrateur.

20. Appareil selon la revendication 19, où l'interface permet également de recevoir l'au moins une règle de mauvaise configuration pour un stockage ultérieur dans le dispositif de mémoire.

21. Appareil selon la revendication 19, où l'au moins une règle de mauvaise configuration peut être définie dynamiquement via l'interface par l'au moins un utilisateur ou administrateur.

22. Appareil selon la revendication 19, où l'interface permet également de recevoir une requête d'au moins utilisateur ou administrateur, la requête concernant le fait si le dispositif électronique possède actuellement une mauvaise configuration, et où le circuit de vérification de règle vérifie automatiquement l'au moins une règle de mauvaise configuration par rapport à l'au moins un paramètre de configuration actuel correspondant en réponse à une réception de la requête par l'interface.

23. Appareil selon la revendication 19, où l'interface comprend une interface du protocole SNMP.

24. Appareil selon la revendication 13, comprenant en outre un dispositif de communication permettant de fournir l'alerte de mauvaise configuration à au moins un utilisateur ou administrateur à un emplacement distant par rapport au dispositif électronique.

25. Procédé selon la revendication 1, comprenant les étapes supplémentaires consistant à :
maintenir au moins une règle de mauvaise configuration concernant une fonctionnalité de sécurité du dispositif électronique dans un dispositif de mémoire contenu dans le dispositif électronique ;
où le dispositif de mémoire permet en outre de stocker l'un ou plusieurs paramètres par défaut d'usine.

26. Appareil selon la revendication 13, où ledit dispositif de mémoire permet en outre de stocker l'un ou plusieurs paramètres par défaut d'usine du dispositif électronique
